# EUROPÄISCHE PATENTSCHRIFT

(11) **EP 0 551 066 B1**
(45) Veröffentlichungstag und Bekanntmachung des Hinweises auf die Patenterteilung: **11.09.1996**
(21) Anmeldenummer: 92890266.7
(22) Anmeldetag: 17.12.1992
(51) Int. Cl.: G01D 5/24, G01B 7/30

(54) **Kapazitiver Drehwinkelsensor**
Capacitive rotary transducer
Capteur de rotation capacitif

(30) Priorität: 30.12.1991 AT 2574/91
(43) Veröffentlichungstag der Anmeldung: 14.07.1993
(73) Patentinhaber: Brasseur, Georg, A-1130 Wien (AT); Eberharter, Thomas Dipl.Ing., A-1020 Wien (AT)
(72) Erfinder: Brasseur, Georg, A-1130 Wien (AT); Eberharter, Thomas, A-1020 Wien (AT)
(74) Vertreter: Matschnig, Franz, Dipl.-Ing.

(56) Entgegenhaltungen:
- EP-A- 0 459 118
- DE-A- 3 328 421
- DE-A- 3 711 062
- FR-A- 2 457 003
- GB-A- 2 176 013
- US-A- 3 732 553
- US-A- 3 845 377
- US-A- 4 238 781

## Beschreibung

Die Erfindung bezieht sich auf eine Vorrichtung zum Bestimmen eines Drehwinkels mittels eines kapazitiven Drehwinkelsensors mit einem ersten Stator zum Einkoppeln einer Mehrzahl elektrischer Signale, der aus einer Mehrzahl flächengleicher, elektrisch leitender Kreissektoren besteht, welche voneinander elektrisch isoliert sind und einen Drehwinkel von 2π vollständig überdecken, mit einem zu dem ersten parallelen, als Ringelektrode ausgebildeten zweiten Stator zum Auskoppeln eines elektrischen Signals, mit einem zu dem ersten und zweiten Stator parallelen Rotor, der zwischen dem ersten und zweiten Stator um eine Drehwelle drehbar angeordnet ist, und mit einer Spannungssignale liegenden Ansteuereinheit, deren Ausgang mit den Sektoren verbunden ist, sowie mit einer zu dem zweiten Sektor angeschlossenen Auswerteeinheit, wobei die Ansteuereinheit zum Bereitstellen von zumindest zwei unterschiedlichen, elektrisch trennbaren Einkoppelsignalen eingerichtet ist.

Ein solcher kapazitiver Drehwinkelsensor ist beispielsweise aus der US-PS 3,845,377 bekannt. Ein einfacher Aufbau, bzw. eine einfache Auswerteelektronik, insbesondere mittels eines Ladungsverstärkers, ermöglichen bei diesem Sensor eine billige Herstellung. Die Auswertung beruht auf der Phasendifferenz zwischen hervorgerufenen und eingeprägten Spannungen an Elektroden des Sensors, wobei jedoch keine Fehlerkompensationsmechanismen für eine Messung vorgesehen sind. Ein Nachteil dieses Sensors besteht somit in einer zu großen Ungenauigkeit.

Eine weitere kapazitive Positionsmeßvorrichtung für Drehbewegungen wird in der DE-OS 37 11 062 geoffenbart, wobei die gezeigte Anordnung zwei identische Statoren aufweist, wobei jeder Stator eine aus Ringsegmenten bestehende Einkoppelelektrode und eine kreisringförmige Auskoppelelektrode enthält. Der dazwischen liegende Rotor ist ebenso als Kombination eines ringförmigen Elements und eines Ringsegmentes ausgebildet. Eine solche Ausführung ermöglicht zwar eine Verbesserung des Verhaltens bei Achsversatz des Rotors, hat jedoch den Nachteil, daß sich die eng beisammen liegenden Ein- und Auskoppelsignale gegenseitig beeinflussen. Zudem kann kein dielektrischer Rotor eingesetzt werden, wodurch der Fehlerfluß tei Achsverkippung aufrecht bleibt.

Eine durch die Anordnung ermöglichte Fehlerkompensation in einem Sensor, insbesondere bei Verschiebung eines Stators, wird nach dem beispielsweise aus der US-PS 4,238 781 bekannten Lösungsvorschlag verwendet, der sich ebenfalls auf Sensoren mit Phasenauswertung bezieht. Wesentliche Nachteile ergeben sich hier durch die nicht berücksichtigten Streufelder und die benötigte zweifache Verstärkerelektronik, wodurch die Genauigkeit eines solchen Sensors stark eingeschränkt ist. Auch die in Betracht gezogene Verwendung eines Multiplexers in der Auswerteelektronik trägt nur geringen Genauigkeitsansprüchen Rechnung, da die Zuleitungskabel Störkapazitäten gegen unbekannte Potentiale aufweisen.

Ein weiterer kapazitiver Drehwinkelsensor ist aus der US-PS 3,732,553 bekannt geworden. Bei diesem Sensor wird der die Einkoppelelektroden enthaltene Stator durch vier flächengleiche 900-Kreissektoren, der Rotor durch zwei 90°-flügel und der die Auskoppelelektrode bildende Stator durch zwei elektrisch verbundene Kreisringsektoren gebildet, deren Zentriwinkel ca. 120° beträgt. Dieser Sensor besitzt aufgrund seiner Geometrie jedoch nur einen Meßbereich von ±10° und ist daher in der Praxis nur begrenzt einsetzbar.

Eine teilweise Fehlerkompensation für kapazitive Drehwinkelgeber ist durch eine mehrfache Anordnung der Elektroden am Umfang eines Drehwinkelgebers möglich, wie dies die DD-PS 213 081, insbesondere im Falle eines Achsversatzes lehrt. Da die Anordnung jedoch nur aus zwei gegenüberliegenden Platten besteht, ist die Amplitude sehr empfindlich auf Abstandsänderungen. Es ist daher nur eine Phasenauswertung möglich. Zusätzlich tritt aufgrund der Anordnung eine Verkopplung der Ansteuersignale mit dem Ausgangssignal ein. Ein weiterer Nachteil ergibt sich dadurch, daß die Periode kleiner ist als 2π.

Es versteht sich, daß sich auf dem Fachgebiet der kapazitiven Linear- und Drehgeber eine größere Auflösung, bzw. Genauigkeit sowohl durch speziellere Anordnungen also auch durch eine aufwendigere Auswerteelektronik erzielen läßt. Aus der EP-A2 0 258 725 geht beispielsweise hervor, daß die Kombination einer Grob- und einer Feinspur eine hohe Genauigkeit ermöglicht. Der Aufwand der benötigten Elektronik ist dementsprechend beträchtlich. Ein solcher Drehgeber ist darüber hinaus mit weiteren Nachteilen behaftet, die in folgendem bestehen: Die einzelnen Segmente in der Feinspur sind so klein, daß das Verhalten nicht unwesentlich durch Streufelder beeinflußt wird.

Der sinusförmige Signalverlauf kann dadurch bei weitem nicht cingehalten werden. Als weiterer Nachteil der Anordnung ist der größere benötigte Durchmesser zu nennen. Durch die Segmentierung der Auskoppelsegmente ist die Empfindlichkeit auf Achsverkippung zwar klein, aber es werden zwei Verstärker je Meßsystem verwendet, sodaß ein exakter Gleichlauf nur schwer herzustellen ist. Da die aktiven Flächen auf beiden Statoren und auf dem Rotor die gleichen Kreisringe belegen, ändert sich die Verkopplung bei Achsversatz. Bei der Feinspur erfolgt die Fehlerkompensation durch eine mindestens zweifache, gegenüberliegende Anordnung, wobei diese Vorgangsweise vor allem bei optischen Encodern üblich ist. Da vier Verstärker benötigt werden ist eine Anordnung der Elektronik in größerer Entfernung vom Sensor nur schwer möglich. Hohe Betriebs- bzw. Umgebungstemperaturen sind daher nur durch Verwendung von speziellen, teuren Verstärkern möglich, welche diesen Temperaturanforderungen entsprechen.

Für Encoder, die mit elektrostatischer Kapazität arbeiten, sind weiters solche Lösungsvorschläge bekannt, wie beispielsweise aus der DE-OS 35 38 455, nach welchen eine nicht segmentierte Koppelelektrode zur Verbindung mit den Empfangselektroden zusätzlich zu einer Ausgangselektrode auf einer ortsfesten Scheibe vorgesehen ist. Die Verbesserung hinsichtlich der Empfindlichkeit auf Achsverkippung bei einer solchen Ausführungsform ist daher nicht wesentlich, obwohl durch die Auskopplung auf der zweiten Seite eines Rotors die gegenseitige Beeinflussung von Ansteuerelektronik und Auswerteelektronik beseitigt wird. Wegen der verhältnismäßig fein strukturierten Anordnung ist ferner eine Verkleinerung des Sensors bei guter Genauigkeit kaum möglich. Der Aufwand für die Ansteuerung ist wegen der großen Anzahl der Signale erheblich.

Weiters ist in der EP-A-0 495 118 ein kapazitiver Stellungsgeber zur Erfassung der Drosselklappenstellung einer Brennkraftmaschine geoffenbart, welcher einen aus drei 120° Segmenten bestehenden Stator und einen Rotor mit einem Zentriwinkel von 240° aufweist, wobei entweder der Stator zugleich als Ein- und Auskoppelektrode dient oder der Stator als Ein- und der Rotor als Auskoppelelektrode dienen. Beide Anwendungsformen sind nicht Vorteilhaft, da der Rotor zwingend aus einem leitenden Material bestehen muß und das Meßergebnis durch Kippen oder Parallelversatz des Rotors stark beeinflußt wird. Der Meßbereich dieser Anordnung ist auf ±60° eingeschränkt. Falls der Rotor als Auskoppelektrode dient, ist ferner kein berührungslos arbeitendes Meßverfahren realisierbar.

In der DE-OS 3 328 421 ist ein Detektor zur Drehzahlmessung beschrieben, welcher aus einer ersten, fest angebrachten Platte mit zwei Elektroden, einer drehbaren Platte mit einer weiteren Elektrode, deren Fläche einer Elektrode der ersten Platte entspricht, und einer zweiten, fest angebrachten Platte, die mit einer Ringelektrode versehen ist, besteht, wobei der durch die beiden festen Platten gebildete Kondensator einen Teil eines RC-Schwingkreises bildet, dessen Schwingungsfrequenz von der Kapazität dieses Kondensators und somit von der Rotation der drehbaren Platte abhängig ist. Diese Vorrichtung ist zur Messung eines Drehwinkels jedoch ungeeignet.

Eine Aufgabe der vorliegenden Erfindung besteht darin, einen kapazitiven Drehwinkelsensor zu schaffen, bei welchem diese Nachteile bekannter Drehgeberarten beseitigt sind und eine Unempfindlichkeit gegenüber Achsversatz, Achsverkippung, bzw. einer nicht exakten Parallelität von Statoren und somit eine erhöhte Genauigkeit durch eine Fehlerkompensation ermöglicht ist. Der Geber soll jedoch einfach aufgebaut, kompakt und billig sein.

Diese Aufgabe wird mittels einer Vorrichtung der eingangs genannten Art dadurch gelöst, daß der Rotor aus einem oder mehreren als Kreissektoren ausgebildeten Flügeln besteht, wobei der Zentriwinkel jedes Flügelsektors gleich der Summe der Zentriwinkel zweier Sektoren des ersten Stators ist, daß der ringförmig ausgebildete, zweite Stator eine von einer äußeren Ringelektrode und einer inneren Ringelektrode isolierte, kreisringförmige Auskoppelelektrode aufweist, und daß die Auswerteeinheit zur Verarbeitung eines einzigen Auskoppelsignals zumindest eine Trennstufe und eine daran angeschlossene elektronische Schaltung aufweist, wobei die an den zweiten Stator angeschlossene Trennstufe zum Trennen des Auskoppelsignales hinsichtlich der Ansteuersignale in Auswertesignale eingerichtet ist, und die nachgeschaltete elektronische Schaltung zur Bestimmung des Drehwinkels aus den Auswertesignalen durch Berechnung aus den Übertragungsfunktionen der Ansteuersignale vorgesehen ist.

Verschiedene Ausführungsformen der Erfindung werden nun ausführlich beschrieben und in der angefügten Zeichnung dargestellt, in der zeigen:
Fig. 1 eine Ausführungsform mit einem aus vier Sektoren bestehenden Stator in schematischer Explosionsdarstellung,
Fig. 2 eine Ausführungsform mit einem aus acht Sektoren bestehenden Stator in schematischer Explosionsdarstellung,
Fig. 3 ein Blockschaltbild einer elektrischen Beschaltung für eine Variante mit vier Sektoren, bzw. mit acht Sektoren nach Fig. 1, bzw. nach Fig. 2 gemäß der Erfindung,
Fig. 4 ein Beispiel für spezielle Signalformen zeitlich hintereinander angelegter AnsteuerU₁ (t) und U₂ (t) bei einer Variante mit vier Sektoren beziehungsweise mit acht Sektoren nach Fig. 1 bzw. nach Fig. 2 und
Fig. 5 die Übertragungsfunktionen k₁ (Φ) bzw. k₂ (Φ) für die Anordnungen nach Fig. 1 sowie Fig. 2.

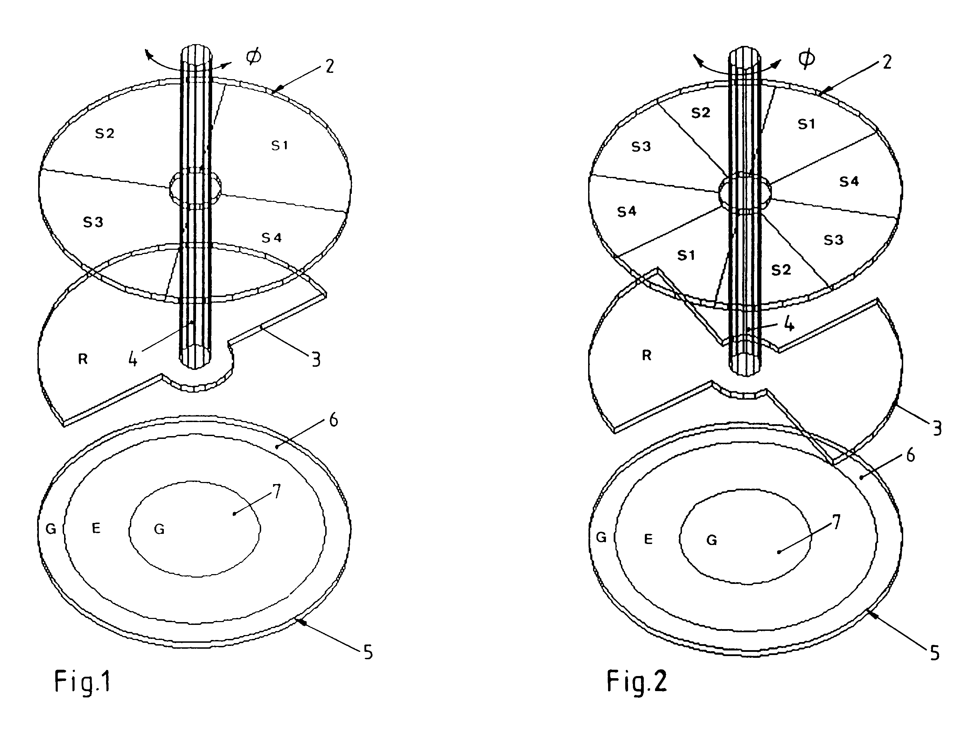

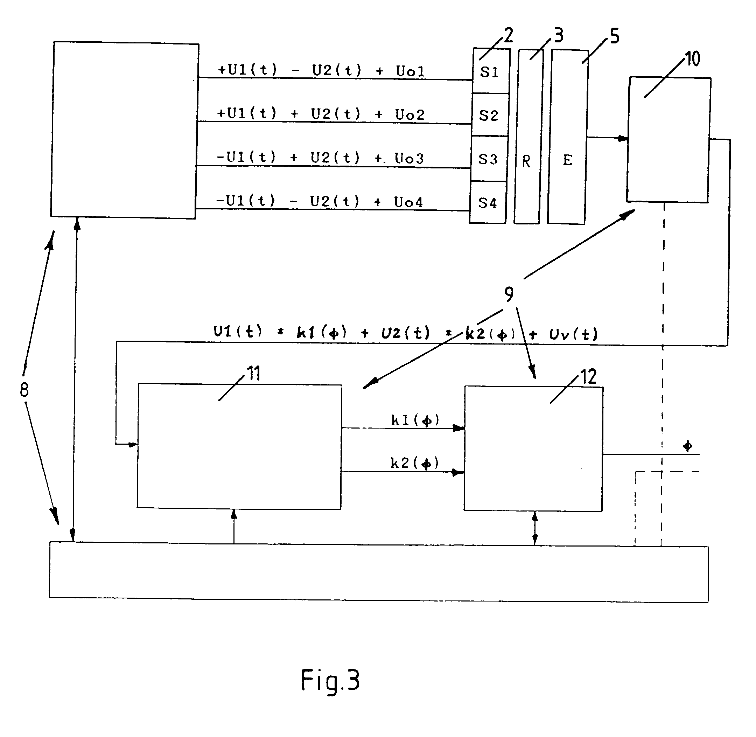

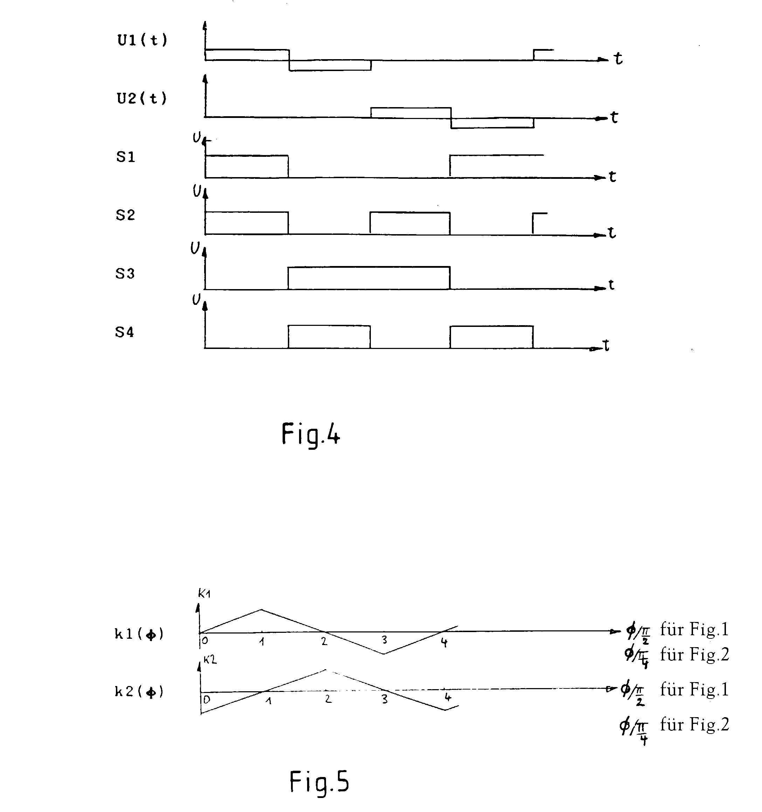

Fig. 1 zeigt den grundlegenden Aufbau eines erfindungsgemäßen Drehwinkelsensors. Ein erster Stator 2 besteht hier aus einem isolierenden Material, das mit vier elektrisch leitenden, voneinander isolierten Sektoren S1, ... S4 beschichtet ist, die jeweils einen Öffnungswinkel von etwa π/2 aufweisen. Die Sektoren S1, ... S4 können jeweils einzeln elektrisch angesteuert werden. Spezielle Ansteuersignale werden weiter unten beschrieben. Ein Rotor 3 ist auf einer Welle 4 befestigt und kann sich zwischen dem ersten Stator 2 und einem zweiten Stator 5 frei drehen, die planparallel angeordnet sind. Der Rotor 3 besteht aus dielektrischem Material, kann aber alternativ auch aus Metall bestehen. Um den Einfluß einer Achsverkippung klein zu halten, sollte die Metallfläche des Rotors 3 aus kleinen, voneinander isolierten Teilflächen bestehen. Eine mögliche Ausführungsart ist die Durchkontaktierung von metallbeschichteten Isolatoren.

Es versteht sich hiebei, daß die Ausbildung des Rotors 3 so erfolgt, daß eine gewünschte Verteilung der Dielektrizität zwischen den Statoren 2 und 5 verwirklicht wird und eine solche Verteilung daher ebenso beispielsweise durch Beschichten einer vollen Kreisscheibe (nicht gezeigt) statt eines halbkreisförmigen Flügels aus dielektrischem Material erzielt werden kann.

Der zweite Stator 5 ist auf einer isolierenden Scheibe aufgebracht, die insgesamt mit drei voneinander isolierten, konzentrischen, leitenden Kreisringen beschichtet ist. Die Kreisringe 6, 7 dienen der Abschirmung, weshalb sowohl der äußere 6 als auch der innere 7 Kreisring mit G bezeichnet sind, wogegen die Auskoppelelektrode des Stators mit E bezeichnet ist. Die Auskoppelelektrode E weist einen kleineren äußeren Durchmesser auf als die Sendeelektroden S1, ... S4 bzw. der mit R bezeichnete Rotor 3. Der Grund dafür ist der Wunsch nach Reduzierung des Achsversatzfehlers.

Der Aufbau des Drehwinkelsensors 1 nach Fig. 2 ist jenem nach Fig. 1 grundsätzlich ähnlich. Die Fehlerkompensation funktioniert hier jedoch wesentlich besser, da die Anzahl der Sektoren S1, ... S4 verdoppelt ist. Die Periode für einen mechanischen Drehwinkel (Φ) reduziert sich dadurch allerdings auf π. Das bedeutet, daß ein Ausgangssignal an der Auskoppelelektrode E zwei Perioden je mechanischer Umdrehung durchläuft.

Wie aus den Figuren 1 und 2 ersichtlich, hängt die Ausbildung des Rotors 3 von der Anzahl der Sektoren S1, ... S4 ab. Während bei der Variante mit vier Sektoren nach Fig. 1 der Rotor aus einem im wesentlichen halbkreisförmigen Flügel besteht, weist er bei der Variante mit acht Sektoren nach Fig. 2 zwei gegenüberliegende viertelkreisförmige Flügel auf, sodaß ein Flügel wieder zwei benachbarten Sektoren im wesentlichen flächengleich ist.

An die Sektoren S1, ... S4 werden elektrische Signalspannungen angelegt, die entsprechende Ladungen an der gemeinsamen Auskoppelelektrode E influenzieren, sodaß diese, Statoren bildende Elektroden auch als Sende- bzw. Empfangselektroden bezeichnet werden.

Fig. 3 zeigt eine Ansteuereinheit 8 mit einer Elektronikeinheit 9, die vier Sektoren S1, ... S4 mit verschiedenen Signalen versorgt. Die Signale werden wie in der Figur angegeben zusammengesetzt. U₀₁, bis U₀₄ stellen hiebei beliebige Offsetspannungen dar. Die Spannungen U₁(t) und U₂(t) müssen verschieden sein, um zumindest zwei verschiedene Ansteuersignale bereitzustellen, die jedoch auf Grund ihrer unterschiedlichen zeitlichen Verläufe in Bezug aufeinander elektronisch getrennt werden können.

Hiebei werden dabei vorzugsweise solche Signale verwendet, deren Wechselanteil einen orthogonalen zeitlichen Verlauf aufweist. Solche Signale sind beispielsweise unter einer entsprechenden Phasenbedingung cos- bzw. sin-förmig oder weisen die Eigenschaften von Walshfunktionen auf, bzw. besitzen Frequenzen, deren Verhältnis im wesentlichen rational ist. Ferner besteht eine weitere einfache Trennungsmöglichkeit darin, daß die Ansteuersignale zeitlich hintereinander angelegt werden.

Wie in Fig. 3 angegeben, erzeugen vier Ansteuersignale an den Sektoren S1, ... S4, abhängig von der Rotorstellung einen aus dem Stator 5 gezogenen Verschiebungsstrom der Form k₁(φ)K₁(φ)*U₁(t) + k₂(φ)*U₂(t). Dieses Signal wird durch einen Block "Verstärker", beispielsweise durch einen einzigen Ladungsverstärker 10 in eine Spannung entsprechender Amplitude umgewandelt. Das verstärkte Signal wird in einer Trennvorrichtung 11 in zwei Komponenten zerlegt und es werden entsprechende Übertragungsfunktionen k₁(φ) und k₂(φ) ermittelt. Als Trennvorrichtung können dabei bekannte Mittel wie Filter, Zeitfenster u.a.m. verwendet werden.

Es versteht sich, daß in einem Kompensationsverfahren die Amplituden der Ansteuersignale so verändert werden können, daß die Ausgangssignale annähernd Null werden. Ein Winkel φ kann sodann aus den vier Ansteueramplituden ermittelt werden. Wesentlich ist die Tatsache, daß nur eine Auskopplung für beide Signalkomponenten verwendet wird. Dadurch ist ein nahezu exakter Gleichlauf der Störungen möglich.

Eine Auswerteelektronik 12 bestimmt schließlich aus k₁(φ) und k₂(φ) den mechanischen Winkel φ. Zur zusätzlichen elektronischen Fehlerkorrektur kann der Zusammenhang |k₁(φ)| + |k₂(φ)| = konstant verwendet werden. Ein Offsetfehler der Faktoren k₁(φ) und k₂(φ), der beispielsweise durch Geometriefehler hervorgerufen wird, kann durch eine Autokalibration des Sensors großteils berücksichtigt werden. Dazu werden mindestens ein Meßpunkt je Quadrant (elektrische Periode), also insgesamt mindestens vier Meßpunkte benötigt. Eine externe Winkelreferenz ist nicht nötig. Die Autokalibration ist auch im Einsatz möglich. Die gewählten Werte sollten nicht an den Übergangsbereichen der Sektoren genommen werden.

Fig. 4 zeigt eine Möglichkeit für eine spezielle Signalform, zeitlich hintereinander angelegter Ansteuersignale U₁(t) und U₂(t) für eine Anordnung nach Fig. 1 oder Fig. 2 und mit einer elektrischen Beschaltung nach Fig. 3. Die entsprechenden Spannungsverläufe an positive Spannungen U führenden Paaren von Sektoren S1, S2; S3, S4; S2, S3 und S1, S4 sind in dieser Figur ebenfalls eingezeichnet, die zeigen, daß bei diesem Beispiel jedes beliebige Paar genau einmal in Verlauf einer Messung eine positive Spannung führen kann.

Die Übertragungsfunktionen k₁(φ) und k₂(φ) entsprechen im Falle einer Ladungsverstärkung in Fig. 3 physikalisch Kapazitäten, die sich für die Anordnungen nach Fig. 1 und Fig. 2 linear mit φ ändern. Sie lassen sich beispielsweise aus einer Messung der Gesamtkapazität wie folgt ermitteln:

U₂ = 0; an S1, S2 mit einer Summenkapazität C₁ liegt +U₁, an S3, S4 mit einer Summenkapazität C₂ liegt -U₁, sodaß die Gesamtladung an E (C₁ - C₂) entspricht und k₁ in Fig. 3 entspricht,

U₁ = 0; an S2, S3 mit einer Summenkapazität C₃ liegt +U₂, an S4, S1 mit einer Summenkapazität C₄ liegt -U₂, sodaß die Gesamtladung an E (C₃ - C₄) entspricht und k₂ in Fig. 3 entspricht.

Fig. 5 zeigt die entsprechenden Verläufe von k₁(φ) und k₂(φ) zu dieser physikalischen Erläuterung der Übertragungsfunktionen. Es ist daraus ersichtlich, daß die Funktionen k₁(φ) und k₂(φ) bei der gegebenen Anordnung symmetrische Dreieckskurven sind, die aufeinanderbezogen eine Viertelperiode mechanischer Phasenverschiebung, bei der Variante nach Fig. 1 π/2, bzw. nach Fig. 2 π/4 aufweisen.

## Patentansprüche

1. Vorrichtung zum Bestimmen eines Drehwinkels (Φ) mittels eines kapazitiven Drehwinkelsensors mit einem ersten Stator (2) zum Einkoppeln einer Mehrzahl elektrischer Signale, der aus einer Mehrzahl flächengleicher, elektrisch leitender Kreissektoren (S₁ ... S₄) besteht, welche voneinander elektrisch isoliert sind und einen Drehwinkel von 2π vollständig überdecken, mit einem zu dem ersten (2) parallelen, als Ringelektrode ausgebildeten zweiten Stator (5) zum Auskoppeln eines elektrischen Signales, mit einem zu dem ersten (2) und zweiten (5) Stator parallelen Rotor (3), der zwischen dem ersten (2) und zweiten (5) Stator um eine Drehwelle (4) drehbar angeordnet ist und aus einem oder mehreren als Kreissektoren ausgebildeten Flügeln besteht, und mit einer Spannungssignale liefernden Ansteuereinheit (8), deren Ausgang mit den Sektoren (S₁ ... S₄) verbunden ist, sowie mit einer zu dem zweiten Stator (5) angeschlossenen Auswerteeinheit (10, 11, 12), wobei die Ansteuereinheit (8) zum Bereitstellen von zumindest zwei unterschiedlichen, elektrisch trennbaren Ansteuersignalen eingerichtet ist, **dadurch gekennzeichnet,**
daß der Zentriwinkel jedes Flügelsektors des Rotors (3) gleich der Summe der Zentriwinkel zweier Sektoren des ersten Stators (2) ist,
daß der ringförmig ausgebildete, zweite Stator (5) eine von einer äußeren Ringelektrode (6) und einer inneren Ringelektrode (7) isolierte, kreisringförmige Auskoppelelektrode (E) aufweist, und
daß die Auswerteeinheit zur Verarbeitung eines einzigen Auskoppelsignals zumindest eine Trennstufe (11) und eine daran angeschlossene elektronische Schaltung (12) aufweist, wobei die an den zweiten Stator (5) angeschlossene Trennstufe (11) zum Trennen des Auskoppelsignales hinsichtlich der Ansteuersignale (U₁(t), U₂(t)) in Auswertesignale (K₁(Φ), K₂(Φ)) eingerichtet ist, und die nachgeschaltete elektronische Schaltung (12) zur Bestimmung des Drehwinkels (Φ) aus den Auswertesignalen (K₁(Φ), K₂(Φ)) durch Berechnung aus den Übenragungsfunktionen der Ansteuersignale vorgesehen ist.

2. Vorrichtung nach Anspruch 1, bei welcher der erste Statcr (2) vier flächengleiche Kreissektoren aufweist, und der Rotor (3) halbkreisförmig ausgebildet ist. (Fig. 1).

3. Vorrichtung nach Anspruch 1, bei welcher der erste Stator (2) acht flächengleiche Kreissektoren (S₁ ... S₄, S₁ S₄) aufweist und der Rotor (3) aus zwei hinsichtlich der Drehwelle (4) gegenüberliegenden, viertelkreisförmigen Flügeln (R) besteht. (Fig. 2).

4. Vorrichtung nach einem der vorigen Ansprüche, bei welcher der Rotor (3) aus dielektrischem Material, aus einem Metall oder einem durchkontaktierten, teilweise metallbeschichteten Isolator gefertigt ist.

5. Vorrichtung nach einem er Ansprüche 1 bis 4, bei welcher die Ansteuereinheit dazu eingerichtet ist, elektrische Ansteuersignale (U₁(t), U₂(t)) mit einem orthogonalen Zeitverlauf, wie z.B. einem sinus/cosinusförmigen, entsprechend von Walshfunktionen oder mit einem rationalen Frequenzverhältnis zu liefern.

6. Vorrichtung nach einem der Ansprüche 1 bis 5, bei welcher die Ansteuereinheit (8) vier mit den Sektoren (S1 .... S4) der Einkoppelelektrode (2) verbundene Ausgänge aufweist, wobei die Ansteuereinheit (8) an einen ersten der Sektoren (S1 .... S4) das Signal (U1-U2)(t), an einen zweiten das Signal (-U1+U2)(t), an einen dritten das Signal (U1+U2)(t) und an einen vierten das Signal (-U1-U2)(t) liefert.

7. Vorrichtung nach Anspruch 6, bei welcher die Ansteuereinheit (8) zum Erzeugen zweier voneinander getrennten Rechteckspannungen (U1 (t), U2 (t)) eingerichtet ist.

## Claims

1. A device to determine the angle of rotation (φ) by means of a capacitive angular displacement transducer, comprising a first stator (2) used to generate electric fields within the transducer due to numerous electrical signals applied to said first stator (2), consisting of a number of electrically conducting circle sectors of equal area (S₁ ... S₄) which are electrically isolated from each other and completely cover a rotational angle of 2π on said first stator (2), and a second stator (5) which is parallel to said first stator (2) comprising a conductive ring electrode for receiving excitation from said first stator (2) and producing an electric output signal, and a rotor (3) mounted on a rotatable axis (4) and located parallel between said first (2) and said second (5) stator consisting of one or more rotor blades in the form of circle sectors, and a generator (8) delivering output voltages to the sectors (S₁ ... S₄) and an evaluation unit (10_{,} 11, 12) connected to said second stator (5), and said generator (8) providing at least two different electrically separable excitation signals **characterized in**
that the centre angle of each rotor blade (3) is equal to the sum of the centre angles of two sectors of said first stator (2),
and that said ring shaped second stator (5) comprises an outer ring electrode (6) and an inner ring electrode (7) isolated from a receiver ring electrode (E) which serves as a receiver electrode,
and that said single input evaluation unit comprises at least one separation unit (11) connected to an electronic signal processing unit (12), wherein said separation unit (11) is connected to said second stator (5) and is capable to separate the received input signals with respect to the excitation signals (U₁(t), U₂(t)) into angle dependent evaluation signals (K₁(φ), K₂(φ)), and a following electronic signal processing unit (12) determining the rotor angle (φ) from said evaluation signals (K₁(φ), K₂(φ)), through calculation from the transfer functions of said excitation signals.

2. A measuring device as claimed in claim 1, wherein said first stator (2) consists of four circle sectors equal in area and said rotor (3) has a semicircular rotor blade (Fig. 1).

3. A measuring device as claimed in claim 1, wherein said first stator (2) consists of eight circle sectors equal in area (S₁ ... S₄, S₁ ... S₄) and said rotor (3) has two opposing across-axis quarter circle rotor blades (R) (Fig. 2).

4. A measuring device according to one of the previous claims in which said rotor (3) is made of one of a dielectric material, of metal, or of a through hole plated partially metal coated isolator.

5. A measuring device according to one of the previous claims in which said generator is capable to generate electric excitation signals (U₁(t), U₂(t)) wherein said signals which are orthogonal in time domain are selected from the group consisting of signals which are sine/cosine shaped, signals which correspond to Walshfunctions, and signals which show rational frequency ratios.

6. A measuring device according to one of the previous claims in which said generator (8) has four outputs connected to said four sectors (S₁ ... S₄) of said first stator (2) whereby said generator (8) delivers the signal (U1-U2)(t) to the first sector of said sectors (S₁ ... S₄), the signal(-U1+U2)(t) to the second sector, the signal (U1+U2)(t) to a third sector, and the signal (-U1-U2)(t) to the fourth sector (Fig. 3).

7. A measuring device as claimed in claim 6, where said generator (8) is capable of producing two shifted rectangular pulse trains (U1(t), U2(t)), (Fig. 4).

## Revendications

1. Dispositif pour la détermination d'un angle de rotation (φ) au moyen d'un capteur d'angle capacitif, comprenant un premier stator (2), pour accoupler plusieurs signaux électriques, étant constitué de plusieurs secteurs circulaires (S₁.....S₄), ayant une même surface conductrice, étant isolés électriquement l'un de l'autre et recouvrant entièrement un angle de rotation de 2π, un deuxième stator (5), sous forme d'une électrode annulaire, étant parallèle au premier stator (2), pour recevoir les excitations du premier stator (2), un rotor (3), fixé autour d'un arbre tournant, et constitué d'un ou plusieurs ailes sous forme de secteurs circulaires, étant parallèle au premier (2) et au deuxième stator (5), ayant une position rotative entre le premier (2) et le deuxième stator (5), un générateur d'impulsions (8), livrant des tensions de sortie aux secteurs (S₁......S₄), et une unité d'évaluation (10, 11, 12), connectée au deuxième stator (5), et le générateur d'impulsions (8), livrant au moins deux différents signaux d'excitation, qui sont électriquement séparables, **caractérisé en ce que**
l'angle au centre de chaque secteur d'aile du rotor (3) est égal à la somme des angles au centre de deux secteurs du premier stator (2),
et le deuxième stator (5), formé comme électrode annulaire, comprend une électrode annulaire extérieure (6) et une électrode annulaire intérieure (7), qui sont isolées d'une électrode annulaire de réception (E),
et l'unité d'évaluation pour une seule entrée d'un signal de réception comprend au moins un étage séparateur (11), connecté à un circuit électronique (12), dont l'étage séparateur (11), connecté au deuxième stator (5), est capable de séparer le signal de réception par rapport aux signaux d'excitation (U₁(t), U₂(t)) dans des signaux d'évaluation avec une dépendance angulaire (K1(φ), K₂(φ)), et un suivant circuit électronique (12) calcule l'angle de rotation (φ) à l'aide des signaux d'évaluation (K₁(φ), K₂(φ)) et des fonctions de transfert des signaux d'excitation.

2. Dispositif selon la revendication 1, **caractérisé en ce que**, le premier stator (2) comprend quatre secteurs circulaires ayant même surface, et le rotor (3) ayant la forme d'un demi-cercle (Fig. 1).

3. Dispositif selon la revendication 1, caractérisé en ce que, le premier stator (2) comprend huit secteurs circulaires (S₁.....S₄, S1.....S₄), ayant même surface, et le rotor (3) constitué de deux ailes (R) opposées par rapport à l'arbre tournant (4), et ayant la forme d'un quart de cercle (Fig.2).

4. Dispositif selon une des revendications précédentes, caractérisé en ce que, le rotor (3) est fabriqué d'un matériel diélectrique, en métal, ou comme isolateur partiellement métallisé et à trous métallisés.

5. Dispositif selon une des revendications 1 à 4, **caractérisé en ce que,** le générateur d'impulsions est capable de fournir des signaux d'excitation électriques (U₁(t), U₂(t)), étant orthogonaux dans le domaine de temps et qui sont sélectionnés du groupe de signaux, ayant la forme sinus/cosinus, des signaux correspondant à des fonctions,,Walsh" et des signaux fournissant un rapport de fréquence rationnel.

6. Dispositif selon une des revendications 1 à 5, **caractérisé en ce que**, le générateur d'impulsions (8) possède quatre sorties, connectées aux secteurs (S1.....S4) du premier stator (2), en ce que le générateur d'impulsions (8) fournisse le signal (U1-U2)(t) au premier des secteurs (S1.....S4), le signal (-U1+U2)(t) au deuxième secteur, le signal (U1+U2)(t) au troisième secteur et le signal (-U1-U2)(t) au quatrième secteur (Fig. 3).

7. Dispositif selon la revendication 6, **caractérisé en ce que**, le générateur d'impulsions (8) est capable de produire deux trains d'impulsions rectangulaires (U1(t), U2(t)), (Fig. 4).
